# EUROPEAN PATENT APPLICATION

(11) **EP 2 506 617 A1**
(43) Date of publication of application: **03.10.2012**
(21) Application number: 10813069.1
(22) Date of filing: 25.11.2010
(51) Int. Cl.: H04W 12/08, H04L 29/06

(54) **SECURE METHOD FOR DISCOVERING AND ACCESSING NEARBY MOBILE DEVICES USING A VISUAL CHANNEL**

(30) Priority: 26.11.2009 ES 200931062
(71) Applicant: Telefónica, S.A., 28013 Madrid (ES)
(72) Inventor: GARCIA BERNARDO, Gustavo, E-28013 Madrid (ES); MARTINEZ ALVAREZ, Javier, E-28013 Madrid (ES)
(74) Representative: Carpintero Lopez, Francisco
(86) International application number: PCT/ES2010/070774
(87) International publication number: WO 2011/064435

(57) **Abstract**

The invention relates to a method for the secure access of a mobile device to a nearby client device with the following phases:

a. the mobile device generating, at the time of receiving a determined stimulus, a code comprising security credentials and a contact address in a server.
b. representing said code and address in the screen of the mobile device
c. the client device detecting and extracting the represented information
d. the client device connecting to the contact address using said credentials
e. the client obtaining the information contained in the contact address.

By means of the invention the server device can indicate the mode of access to the contents or services associated with said device, both if they are offered directly from the device itself and if they are offered from another external element.

## Description

### Field of the Invention

The present invention belongs to the mobile communications sector, specifically to the access to contents and services of mobile devices from other devices which are physically nearby.

### Background of the Invention

During the transmission of contact and access information between two devices which are near one another (mobile and client), the use of easily visually recognisable patterns for encoding of said information is known. Traditional bar codes, such as those described in US2612994-A, or two-dimensional bar codes such as QR codes (Quick Response bar codes formed by a matrix of black and white squares which code the information represented by the code) can be used for this purpose. These bar codes are normally used for commercial product tags, and in the case of two-dimensional bar codes, for encoding web content access URLs. In the field of mobile devices these codes have been used to easily read those access URLs using the image capture capabilities of the devices. When a client wishes to access the contents or services of a device which is nearby there are three phases that have to be completed in order to have access thereto:
● Discovery of the device (it consists of detecting the device which the client wishes to access).
● Access control (it allows checking that the client has the permissions necessary for accessing the content or the services which he wishes to access).
● Access to the content or the services (it consists of the access to the information through the interfaces displayed by the elements).

Bluetooth technology allows the access between devices which are near one another by means of radio frequency. This technology is present in many present-day mobile telephones. The capabilities offered by this technology include mechanisms for the discovery of other devices in the network and access control by means of a pairing process in which the client and the device must know one and the same password. The access to the services of the device is defined in a set of Bluetooth profiles which the devices should implement according to the services that they wish to offer. Both in the case of Bluetooth connectivity and other radio technologies, it is possible to use the received power measure as an indicator of the proximity between the devices.

In those cases in which there is IP connectivity between the devices there are different alternatives for the discovery of devices and services. These solutions are mainly based on the use of the multicast and broadcast capabilities of the IP networks, which allows discovering other services. In these cases the devices usually implement an access control based on credentials which are sent by the client device to the server device implementing the service. There are different protocols such as Simple Service Discovery Protocol (SSDP), Domain Name System Service Discovery (DNS-SD) or Service Location Protocol (SLP) which define the syntax and semantics of the messages exchanged for discovering and accessing the capabilities of the devices.

Radio Frequency Identification (RFID) technology, or its extension Near Field Communication (NFC), allows including in the devices a tag which contains a small antenna to allow receiving and responding to requests by radiofrequency from a RFID emitter-receiver. This technology allows discovering the nearby tagged objects with complete precision since it is a very short-range radio technology, and in the case de NFC it is specifically aimed at the use in mobile devices.

Currently there are many scenarios in which a "client" device wishes to access the contents or services available in a nearby "server" device. This is the case for example of a screen in which the contents of a mobile left in its proximity by the user are to be displayed, or the case of an automatic teller machine in which the identity of the user is to be verified by means of his mobile device.

In scenarios of this type there are several technical problems:
1. The client device must be able to detect that a mobile device has appeared in its proximity without requiring specific hardware or complex software for computer vision. This can be resolved if the mobile device has Bluetooth capabilities or another type of short-range connectivity, but at present many devices do not have this capability or they have it disabled by default. The client device must be able to detect what device has appeared and how to connect to it.
2. The server device must be able to verify that the client device attempting to connect to it is the device for which it wishes to allow it. For example, RFID technology does not allow the device containing the RFID tag to detect that it is being accessed, nor of course, to authenticate the access.
3. The server device must be able to indicate the mode of access to the contents or services associated with said device, both if they are offered directly from the device itself and if they are offered from another external element.

As regards the detection of devices in proximity (problem 1), the use of the visual channel has already been described previously and the description of the use of gestural interfaces is added to the present invention to improve these systems both with regard to automation (reducing the number of operations that the user must perform manually) and with regard to security (limiting the access to the visual channel).

As regards the verification of the access (problem 2), there are at present different solutions which allow verifying the client device which is connecting to the desired device, but which do not allow the server device to verify that the client device is a device authorised to access its contents or services.

As regards the access (problem 3), there are no previous solutions which allow offering this functionality

### Object of the Invention

The object of the present invention is therefore to offer an independent mechanism of the access channel and even of the final device which offers the service, allowing the information to be obtained through an external server in the network instead of accessing the device itself.

The process of the invention comprises the steps of:
a. the mobile device generating, at the time of receiving a determined stimulus, a code comprising security credentials and a contact address in a server.
b. representing said code and address in the screen of the mobile device
c. the client device detecting and extracting the represented information
d. the client device connecting to the contact address using said credentials
e. the client obtaining the information contained in the contact address.

The code can be in text form or be a QR code. The stimulus can be a movement of the mobile device (when the latter has an accelerometer), the activation of a key by a user or turning the mobile and placing it with the screen facing downwards so that only the device which is below it has access to this information.

The code can have a limited life and be regenerated after each use.

### Brief Description of the Drawings

For the purpose of aiding to better understand the features of the invention according to a preferred practical embodiment thereof, a set of drawings is attached to the following description, in which the following has been depicted with an illustrative character:
Figure 1 generally describes the parts of the mobile terminal involved in the system.

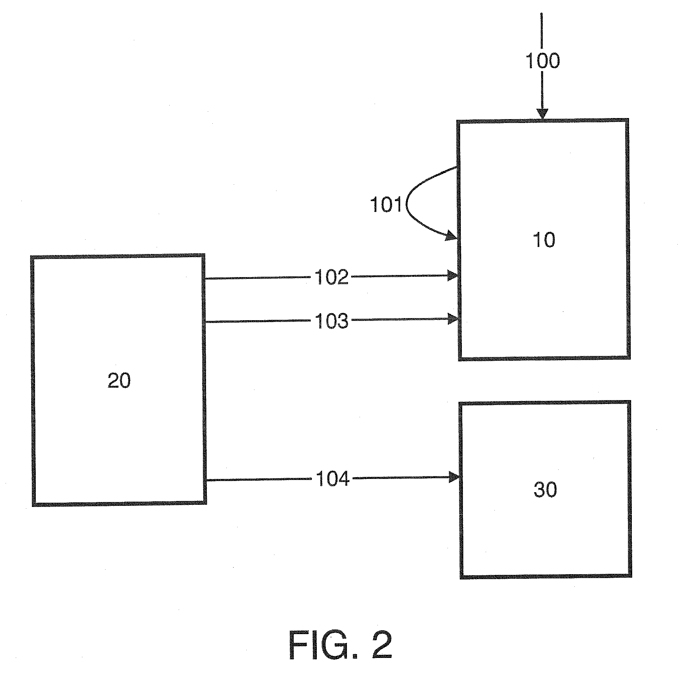

Figure 2 is a sequence diagram.

### Detailed Description of the Invention

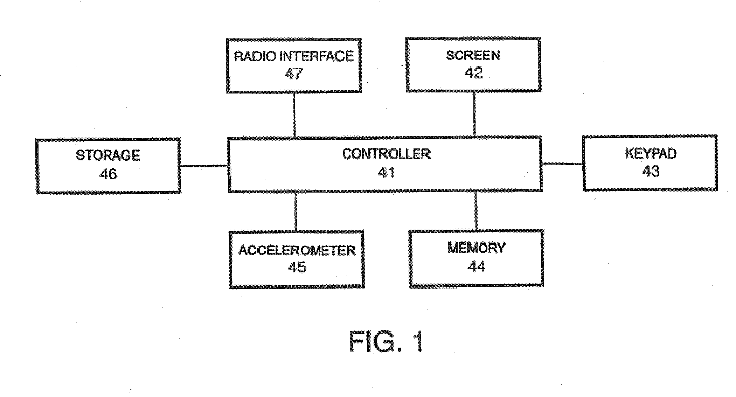

A mobile device adapted to carry out the process of the invention is schematically described in Figure 1. The device is made up of, among other elements, a controller (41), a screen (42), a keypad (43), memory and storage subsystems (44, 45), some type of radio communications interface (47) and, optionally, an accelerometer (46).

The method for secure access comprises the following phases:
1. The mobile device generates a pseudorandom code which will be used as a key (e.g. "AAAAAAA") and a contact address (e.g. "http://mydevice/" or "bluetooth://FF:FF:FF:FF:FF:FF", etc.) and shows it in its screen (42) in a format from which it is possible to easily read and retrieve the information (for example in a QR code or a text in the event of having OCR systems in the client device). This code could include additional information which could be useful, such as the common name of the device. The contact address will depend on the connectivity capabilities of the device. This code can be created and displayed when the user presses a key of the mobile device or with a stimulus such as turning the mobile and placing it with the screen facing downwards so that only the device which is below it has access to this information. These codes will have a limited life, being able to be regenerated for each new use.
2. The client device accesses, by means of its image capture capabilities, the code shown in the mobile screen and extracts the information included therein as described in 1.
3. The mobile device receives the connection (10), verifies the credentials and accepts it. The client device (20) will not connect to the mobile device in order to obtain the information but rather it will connect to another element in the network (30) which has the contents or services to be accessed. The mobile device (10) could receive a notification instead of the connection for obtaining the data. La verification can include a manual stage in which the user must explicitly accept the connection.

The obtaining of the data or the access to the service is performed according to the specific mechanisms of each type of data or service.

A possible embodiment of the invention is described below for the purpose of setting forth the described method more clearly, without this limiting the scope of the invention.

The user carrying a mobile device (10) with the capacity to display images presses a key of the mobile device (43), or carries out a change in the orientation of the mobile in order to place it on the surface of the client device (20) which will be detected by the accelerometer of the mobile device (46).

When the mobile device detects this event, it generates a temporal code which can be generated randomly, for example, which will be used as a key ("AAAAAAA") and a contact address which allows the client device to access the repository in which the contents and the services are located (for example "http://mydevice"). This information is generated in a QR code and is shown in the screen of the mobile device (42).

The image capture peripheral of the client device detects the pattern displayed in the screen of the mobile device and when it processes it in order to extract the information contained therein, it detects that it is a mobile device and that it has associated therewith a password and an access address.

The client device connects to the extracted access address, which in this specific case is that of a server in the network (30) which has a copy of the contents of the mobile device. For this connection, the communication mechanism associated with the address obtained will be used (in this case the HTTP protocol will be used), and the credentials obtained by means of the security methods associated with the associated communication method will be used.

The server in the network will send a notification to the mobile device, including the credentials for its verification. The mobile device will verify that the credentials are valid and it will inform the user, allowing the latter to accept or cancel the communication. This response from the user will be communicated to the server in the network such that it can begin the transfer of contents to the client device in the event of having been accepted.

## Claims

1. Method for the secure access of a mobile device to a nearby client device, wherein the mobile device is provided with a screen, memory and storage means and the client device is provided with image capture and detection means, and wherein the method comprises the following phases:
a. the mobile device generating, at the time of receiving a determined stimulus, a code comprising security credentials and a contact address in a server.
b. representing said code and address in the screen of the mobile device
c. the client device detecting and extracting the represented information
d. the client device connecting to the contact address using said credentials
e. the client obtaining the information contained in the contact address.

2. Method according to claim 1, wherein the code is in text form.

3. Method according to claim 1, wherein the code is a QR code.

4. Method according to any of the previous claims, wherein the mobile device has an accelerometer and the stimulus is a movement of the mobile device.

5. Method according to any of claims 1 to 3, wherein the stimulus is the activation of a key of the mobile device by a user.

6. Method according to anyone of the previous claims, wherein the code has a limited life and is regenerated after each use.
